# EUROPEAN PATENT SPECIFICATION

(11) **EP 1 359 189 B1**
(45) Date of publication and mention of the grant of the patent: **09.11.2005**
(21) Application number: 03008042.8
(22) Date of filing: 14.04.2003
(51) Int. Cl.: C08K 3/36, C08L 23/22, C08L 23/28

(54) **Rubber composition for tire treads**
Gummimischung für Reifenlaufflächen
Composition de caoutchouc pour bande de roulement d'un pneu

(30) Priority: 26.04.2002 CA 2383474
(43) Date of publication of application: 05.11.2003
(73) Proprietor: Lanxess Inc., Sarnia, Ontario N7T 7M2 (CA)
(72) Inventor: Hopkins, William, Sarnia, Ontario N7S 6GS (CA); Kaszas, Gabor, South London, Ontario N6C 3Z6 (CA)
(74) Representative: Zobel, Manfred

(56) References cited:
- EP-A- 0 376 227
- WO-A-01/21672
- WO-A-01/96463
- WO-A-02/16452
- US-A- 4 097 658
- US-A- 4 151 338
- US-A- 4 229 325
- US-A- 5 723 529
- US-A- 5 883 207
- US-A- 6 068 694

## Description

### TECHNICAL FIELD

The present invention relates to a rubber composition for a tire tread, in particular a tire tread suitable for a pneumatic tire.

### BACKGROUND ART

Wet grip and the improvement of the wet grip is an important goal in today's Tire Industry. The incorporation of butyl rubber and/or halogenated butyl rubber is known to improve the wet grip of tire treads but has generally poor abrasion resistance which leads to unacceptable life times of tires (see US-A-2,698,041, GB-A-2,072,576 and EP-A1-0 385 760)

Butyl rubber is a copolymer of an isoolefin and one or more multiolefins as comonomers. Commercial butyl usually comprise a major portion of isoolefin and a minor amount of a multiolefin. The preferred isoolefin is isobutylene.

Suitable multiolefins include isoprene, butadiene, dimethyl butadiene, piperylene, etc. of which isoprene is preferred.

Halogenated butyl rubber is butyl rubber which has Cl and/or Br-groups.

Butyl rubber is generally prepared in a slurry process using methyl chloride as a polymerization medium and a Friedel-Crafts catalyst as the polymerization initiator. The methyl chloride offers the advantage that AlCl₃ a relatively inexpensive Friedel-Crafts catalyst is soluble in it, as are the isobutylene and isoprene comonomers. Additionally, the butyl rubber polymer is insoluble in the methyl chloride and precipitates out of solution as fine particles. The polymerization is generally carried out at temperatures of about -90°C to -100°C. See U.S. Patent No. 2,356,128 and *Ullmanns Encyclopedia of Industrial Chemistry,* volume A 23, 1993, pages 288-295. The low polymerization temperatures are required in order to achieve molecular weights which are sufficiently high for rubber applications.

Halogenated butyls are well known in the art, and possess outstanding properties such as oil and ozone resistance and improved impermeability to air. Commercial halobutyl rubber is a halogenated copolymer of isobutylene and isoprene.

It is known from CA-A1-2,282,900 and US-A-3,042,662 to prepare halogenated terpolymers of isobutylene, diolefin monomer and styrenic monomer. However, the further use of a fourth monomer and its benefits with regard to abrasion resistance was not recognized. It is known from WO 02/16452 A to prepare rubber compositions comprising isoolefin multiolefin quartpolymer and at least one silica compound. But it has not known a method for providing a better abrasion resistance. From US-A-4 097 658 and US-A-4 151 338 rubber compositions without silica compounds are known. From WO 01/96463 A, US-A-5 723 529, US-A-6 068 694, EP-A-0 376 227 and WO 01/21672 A further rubber compositions comprising silica are known.

### SUMMARY OF THE INVENTION

The object of the present invention is to provide a rubber composition for a tire tread particularly in a pneumatic tire characterized in that said rubber composition comprises an optionally halogenated, low-gel, high molecular weight isoolefin multiolefin quartpolymer, in particular a low-gel, high molecular weight isoolefin multiolefin quartpolymer synthesized from at least one isoolefin monomer, at least one multiolefin monomer, at least one multiolefin cross-linking agent and at least one styrenic monomer, together with at least one filler compound and optionally one or more halogenated isoolefin multiolefin copolymers.

Another object of the present invention is to provide a process for the preparation of said rubber composition.

Still another object of the present invention is to provide a tire tread comprising said rubber composition.

### DETAILED DESCRIPTION OF THE INVENTION

A quartpolymer is a copolymer of four or more monomers. With regard to the present invention, these quartpolymers are preferably statistical copolymers.

Isoolefins are known to those skilled in the art. With respect to the monomers polymerized to yield the quartpolymer used in the composition, the expression isoolefin in this invention is preferably used for a C₄ to C₇ monoolefin, such as isobutylene, 2-methyl-1-butene, 3-methyl-1-butene, 2-methyl-2-butene, 4-methyl-1-pentene and mixtures thereof. Isobutylene is mostly preferred.

As multiolefin every multiolefin copolymerizable with the isoolefin known by the skilled in the art can be used. Preferred are C₄ to C₁₄ dienes such as isoprene, butadiene, 2-methylbutadiene, 2,4-dimethylbutadiene, piperyline, 3-methyl-1,3-pentadiene, 2,4-hexadiene, 2-neopentylbutadiene, 2-methly-1,5-hexadiene, 2,5-dimethly-2,4-hexadiene, 2-methyl-1,4-pentadiene, 2-methyl-1,6-heptadiene, cyclopenta-diene, methylcyclopentadiene, cyclohexadiene, 1-vinyl-cyclohexadiene and mixtures thereof. Isoprene is particularly preferably used.

The expression multiolefin cross-linking agent in this invention is understood to denote a multiolefin monomer that is prone to cross-link two polymer chains rather than adding to a monomer chain and thus forming isolated polymer chains as a multiolefin monomer would do. If a multiolefin acts as a monomer or cross-linking agent under the given polymerization parameters is easily determined by a few limited, preliminary examples. The expression multiolefin cross-linking agent in this invention is preferably used for multiolefins with 8 to 16 carbon atoms. Especially preferred are aromatic diolefins as divinyl benzene, norbornadiene, 2-isopropenylnorbornene, 2-vinyl-norbornene, 1,3,5-hexatriene, 2-phenyl-1,3-butadiene, divinylbenzene, diisopropenylbenzene, divinyltoluene, divinylxylene and C₁ to C₂₀ alkyl-substituted derivatives thereof.

As styrenic monomers every styrenic monomer copolymerizable with the monomers mentioned above known by the skilled in the art can be used. Styrene, alpha-methyl styrene, various alkyl styrenes including p-methylstyrene, p-methoxy styrene, p-chlorostyrene, 1-vinylnaphthalene, 2-vinyl naphthalene, 4-vinyl toluene, indene (including indene derivatives), and mixtures thereof are preferably used.

As halogenated isoolefin multiolefin copolymer every commercial available halogenated butyl rubber such as Bayer® Bromobutyl 2030, 2040, BBX2; Bayer® Chlorobutyl 1240, 1255; Exxon® Bromobutyl 2222, 2235, 2255; Exxon® Chlorobutyl 1066, 1068; Exxon® EXXPRO™ MDX 89-1, EMDX 89-4, EMDX 90-10, (Tradenames) or any other halogenated isoolefin multiolefin copolymer optional having further copolymerizable monomers comprising the monomers mentioned above can be used. Furthermore halogenated butyl rubber as disclosed in Rubber Technology, Third Edition, Maurice Morton Editor, Kluwer Academic Publishers (1999) is suitable.

The composition of the quartpolymer is varible. Usually the amount of isoolefin monomer is in the range of from 80 to 99.79 mol%, the amount of multiolefin monomer in the range of from 0.1 to 19.89 mol%, the amount of multiolefin cross-linking agent in the range of from 0.01 to 19.80 mol% and the amount of styrenic monomer in the range of from 0.1 to 19.89 mol%. It is trivial that the skilled in the art will adjust the different ranges of the monomers used to result in 100 %.

The weight average molecular weight M_{w} of the polymers used is greater than 200 kg/mol, preferably greater than 300 kg/mol, more preferably greater than 350 kg/mol, even more preferably greater than 400 kg/mol.

The gel content of the copolymers used is less than 1.2 wt.%, preferably less than 1 wt%, more preferably less than 0.8 wt%, even more preferably less than 0.7 wt%.

Usually, the process for producing the quartpolymer is conducted at a temperature conventional in the production of butyl polymers - e.g., in the range of from about -100°C to about +50°C. The quartpolymer may be produced by polymerization in solution or by a slurry polymerization method. Polymerization is preferably conducted in suspension (the slurry method) - see, for example, Ullmann's Encyclopedia of Industrial Chemistry (Fifth, Completely Revised Edition, Volume A23; Editors Elvers et al.).

As an example, in one embodiment the process is conducted in the presence of an aliphatic hydrocarbon diluent (such as n-hexane) and a catalyst mixture comprising a major amount (in the range of from 80 to 99 mole percent) of a dialkylaluminum halide (for example diethylaluminum chloride), a minor amount (in the range of from 1 to 20 mole percent) of a monoalkylaluminum dihalide (for example isobutylaluminum dichloride), and a minor amount (in the range of from 0.01 to 10 ppm) of at least one of a member selected from the group comprising water, aluminoxane (for example methylaluminoxane) and mixtures thereof.

Of course, other catalyst systems conventionally used to produce butyl polymers can be used to produce a quartpolymer which is useful herein - see, for example, "Cationic Polymerization of Olefins: A Critical Inventory" by Joseph P. Kennedy (John Wiley & Sons, Inc. © 1975).

In the case of discontinuous operation, the process may, for example, be performed as follows:

The reactor, precooled to the reaction temperature, is charged with solvent or diluent, the monomers. The initiator is then pumped in the form of a dilute solution in such a manner that the heat of polymerization may be dissipated without problem. The course of the reaction may be monitored by means of the evolution of heat.

All operations are performed under protective gas. Once polymerization is complete, the reaction is terminated with sodium hydroxide containing ethanol and stabilized by the addition of a phenolic antioxidant, such as, for example, 2,2'-methylenebis(4-methyl-6-tert.-butylphenol).

This process provides isoolefin quartpolymers which are useful in the preparation of the inventive compound.

In another aspect, these copolymers are the starting material for the halogenation process which yields the halogenated copolymers also useful for the preparation of the inventive compound. These halogenated compounds can be used together or without the non-halogenated copolymers described above.

Halogenated isoolefin rubber, especially butyl rubber, may be prepared using relatively facile ionic reactions by contacting the polymer, preferably dissolved in organic solvent, with a halogen source, e.g., molecular bromine or chlorine, and heating the mixture to a temperature ranging from 20 °C to 90 °C for a period of time sufficient for the addition of free halogen in the reaction mixture onto the polymer backbone.

Another continuous method is the following: Cold butyl rubber slurry in chloroalkan (preferably methyl chloride) from the polymerization reactor in passed to an agitated solution in drum containing liquid hexane. Hot hexane vapors are introduced to flash overhead the alkyl chloride diluent and unreacted monomers. Dissolution of the fine slurry particles occurs rapidly. The resulting solution in stripped to remove traces of alkyl chloride and monomers, and brought to the desired concentration for halogenation by flash concentration. Hexane recovered from the Flash concentration step is condensed and returned to the solution drum. In the halogenation process butyl rubber in solution is contacted with chlorine or bromine in a series of high-intensity mixing stages. Hydrochloric or hydrobromic acid is generated during the halogenation step and must be neutralized. For a detailed description of the halogenation process see U.S. Patent Nos. 3,029,191 and 2,940,960, as well as U.S. Patent No. 3,099,644 which describes a continuous chlorination process, EP-A1-0 803 518 or EP-A1-0 709 401.

Another process suitable in this invention is disclosed in EP-A1-0 803 518 in which an improved process for the bromination of a C₄-C₆ isoolefin (i.e. an isololefin having 4, 5 or 6 carbon atoms)-C₄-C₆ conjugated diolefin polymer which comprises preparing a solution of said polymer in a solvent, adding to said solution bromine and reacting said bromine with said polymer at a temperature of in the range of from 10°C to 60°C and separating the brominated isoolefin-conjugated diolefin polymer, the amount of bromine being in the range of from 0.30 to 1.0 moles per mole of conjugated diolefin in said polymer, characterized in that said solvent comprises an inert halogen-containing hydrocarbon, said halogen-containing hydrocarbon comprising a C₂ to C₆ paraffinic hydrocarbon or a halogenated aromatic hydrocarbon and that the solvent further contains up to 20 volume per cent of water or up to 20 volume per cent of an aqueous solution of an oxidising agent that is soluble in water and suitable to oxidize the hydrogen bromide to bromine in the process substantially without oxidizing the polymeric chain is disclosed.

Another useful process is disclosed in United States patent 5,886,106. Thus, the halogenated quart polymer may be produced either by treating finely divided quart polymer with a halogenating agent such as chlorine or bromine, or by producing brominated quartpolymer by the intensive mixing, in a mixing apparatus, of brominating agents such as N-bromosuccinimide with a previously made quart polymer. Alternatively, the halogenated quart polymer may be produced by treating a solution or a dispersion in a suitable organic solvent of a previously made quart polymer with corresponding brominating agents. See, for more detail, Ullmann's Encyclopedia of Industrial Chemistry (Fifth, Completely Revised Edition, Volume A23; Editors Elvers et al.). The amount of halogenation during this procedure may be controlled so that the final quart polymer has the preferred amounts of halogen.

The skilled in the art will be aware of many more suitable halogenation processes but a further enumeration of suitable halogenation processes is not deemed helpful for further promoting the understanding of the present invention.

Preferably the bromine content is in the range of from 1- 30 wt.%, even more preferably 1.5-15 particularly preferable 1.5-12.5, and the chlorine content is preferably in the range of from 1 - 15 wt.%, even more preferably 1-8, particularly preferable 1-6.

It is in the understanding of the skilled in the art that either bromine or chlorine or a mixture of both can be present.

With respect to the filler every filler used in a tire tread compound such as carbon black or silica fillers can be used.

The rubber composition for a tire tread of the present invention can be obtained by blending the optionally halogenated isoolefin multiolefin quartpolymer together with filler and natural rubber and/or a synthetic diene rubber. Mixtures not containing natural rubber and/or a synthetic diene rubber are also within the scope of the invention.

It is advantageous to blend the quartpolymer/mixture of quartpolymers with in the range of from 10 to 90 phr of a halogenated isoolefin multiolefin copolymer and optionally in the range of from 10 to 60 phr of natural and/or synthetic diene rubber.

Preferred synthetic diene rubbers are disclosed in I. Franta, Elastomers and Rubber Compounding Materials, Elsevier, Amsterdam 1989 and comprise
- BR -: Polybutadiene
- ABR -: Butadiene/Acrylic acid-C₁-C₄-alkylester-Copolymers
- CR: Polychloroprene
- IR -: Polyisoprene
- SBR -: Styrene/Butadiene-Copolymerisates with styrene contents in the range of 1 to 60, preferably 20 to 50 wt.-%
- NBR -: Butadiene/Acrylonitrile-Copolmers with Acrylonitrile contents in the range of from 5 to 60, preferably in the range of from 10 to 40 wt.-%
- HNBR -: partially or totally hydrogenated NBR-rubber
- EPDM -: Ethylene/Propylene/Diene-Copolymerisates
- FKM: fluoropolymers or fluororubbers
and mixtures of the given polymers.

Among the synthetic diene rubbers, a high-cis BR is particularly preferable, and in the case of a combination of the natural rubber (NR) and the high-cis BR, a ratio of the natural rubber (NR) to the high-cis BR is in the range of from 80/20 to 30/70, preferably in the range of from 70/30 to 40/60. In addition, the amount of the combination of the natural rubber and the high-cis BR is 70% by weight or more, preferably 80% by weight or more, more preferably 85% by weight or more.

Furthermore, the following rubbers are of particular interest for the manufacture of motor vehicle tyres with the aid of surface-modified fillers: natural rubber, emulsion SBRs and solution SBRs with a glass transition temperature above -50°C, which can optionally be modified with silyl ethers or other functional groups, such as those described e.g. in EP-A 447,066, polybutadiene rubber with a high 1,4-cis content (>90%), which is prepared with catalysts based on Ni, Co, Ti or Nd, and polybutadiene rubber with a vinyl content of in the range of from 0 to 75%, as well as blends thereof.

The filler compound(s) may be preferably used in an amount of in the range of from 5 to 500, more preferably 40 to 100 phr and is preferably composed of
- highly dispersing silicas, prepared e.g. by the precipitation of silicate solutions or the flame hydrolysis of silicon halides, with specific surface areas of in the range of from 5 to 1000, preferably 20 to 400 m²/g (BET specific surface area), and with primary particle sizes of 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas of in the range of from 20 to 400 m²/g and primary particle diameters of in the range of from 10 to 400 nm;
- natural silicates, such as kaolin and other naturally occurring silica
- carbon blacks; the carbon blacks to be used here are prepared by the lamp black, furnace black or gas black process and have BET specific surface areas of in the range of from 20 to 200 m²/g, e.g. SAF, ISAF, HAF, SRF, FEF or GPF carbon blacks.
or mixtures thereof.

The composition could also comprise in the range of from 5 to 500, more preferably 40 to 100 parts by weight per hundred parts by weight rubber (=phr) of active or inactive filler(s) such as:
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, and calcium carbonate;
- metal hydroxides, e.g. aluminum hydroxide and magnesium hydroxide;
- rubber gels, especially those based on polybutadiene, butadiene/styrene copolymers, butadiene/acrylonitrile copolymers and polychloroprene; or mixtures thereof.

Examples of also suitable mineral filler(s) include clay such as bentonite, gypsum, alumina, titanium dioxide, talc and, mixtures of these. These mineral particles have hydroxyl groups on their surface, rendering them hydrophilic and oleophobic. This exacerbates the difficulty of achieving good interaction between the filler particles and the butyl elastomer.

Dried amorphous silica particles suitable for use in accordance with the invention may have a mean agglomerate particle size in the range of from 1 to 100 microns, preferably from 10 to 50 microns and most preferably between 10 and 25 microns. It is preferred that less than 10 percent by volume of the agglomerate particles are below 5 microns or over 50 microns in size. A suitable amorphous dried silica moreover has a BET surface area, measured in accordance with DIN (Deutsche Industne Norm) 66131, of in the range of from 50 to 450 square meters per gram and a DBP absorption, as measured in accordance with DIN 53601, of between 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil® S and Vulkasil® N, from Bayer AG. Preferred are highly dispersible silicas as Ultrasil® 7000 or Perkasil® 1165 mp.

It might be advantageous to use a combination of carbon black and mineral filler in the inventive compound. In this combination the ratio of mineral fillers to carbon black is usually in the range of from 0.05 to 20, preferably 0.1 to 10.

For the rubber composition of the present invention it is usually advantageous to contain carbon black in an amount of in the range of from 20 to 200 phr, preferably 45 to 80 phr, more preferably 48 to 70 phr.

Further addition of polymer-filler bonding agents such as silane compounds or an additive which has at least one hydroxyl group and one basic nitrogen-containing group, preferably one as disclosed in Canadian Application 2,339,080, may be advantageous, especially in combination with highly active fillers. The silane compound may be a sulfur-containing silane compound or an amine containing silane. Suitable sulfur-containing silanes include those described in United States patent 4,704,414, in published European patent application 0,670,347 A1 and in published German patent application 4435311 A1. One suitable compound is a mixture of bis[3-(triethoxysilyl)propyl]-monosulfane, bis[3-(triethoxysilyl)propyl] disulfane, bis[3-(triethoxysilyl)propyl]trisulfane and bis[3-(triethoxysilyl)propyl]-tetrasulfane and higher sulfane homologues available under the trademarks Si-69 (average sulfane 3.5), Silquest™ A-1589 (from CK Witco)or Si-75 (from Degussa) (average sulfane 2.0). Another example is bis[2-(triethoxysilyl)ethyl]-tetrasulfane, available under the trade-mark Silquest RC-2. Non-limiting illustrative examples of other sulfur-containing silanes include the following:
bis[3-(triethoxysilyl)propyl]disulfane,
bis[2-(trimethoxysilyl)ethyl]tetrasulfane,
bis[2-(triethoxysilyl)ethyl]trisulfane,
bis[3-(trimethoxysilyl)propyl]disulfane,
3-mercaptopropyltrimethoxysilane,
3-mercaptopropylmethyldiethoxysilane, and
3-mercaptoethylpropylethoxymethoxysilane.

Other preferred sulfur-containing silanes include those disclosed in published German patent application 44 35 311 A1.

Suitable amine-containing silanes are known and disclosed e.g. in CA 2,293,149. Preferred are:
3-aminopropylmethyldiethoxysilane,
N-2-(vinylbenzylamino)-ethyl-3-aminopropyl-trimethoxysilane,
N-(2-aminoethyl)-3-aminopropyltrimethoxysilane, trimethoxysilylpropyldiethylenetriamine,
N-2-(aminoethyl)-3 aminopropyltris(2-ethylhexoxy)-silane,
3-aminopropyldiisopropylethoxysilane,
N-(6-aminohexy)aminopropyltrimethoxysilane,
4-aminobutyltriethoxysilane,
4-aminobutyldimethylmethoxysilane, triethoxysilylpropyl-diethylenetriamine,
3-aminopropyltris(methoxyethoxyethoxy)silane,
N-(2-aminoethyl)-3-aminopropyltrimethoxysilane,
N-2-(aminoethyl)-3-aminopropyltris(2-ethylhexoxy)-silane,
3-aminopropyldiisopropylethoxysilane,
N-(6-aminohexyl)aminopropyltrimethoxysilane,
4-aminobutyltrieihoxysilane, and (cyclohexylaminomethyl)-methyldiethoxysilane.

The silane is usually applied in amounts in the range of from 2 to 12 phr.

Certain organic compounds containing at least one basic nitrogen-containing group and at least one hydroxyl group enhance the interaction of halobutyl elastomers with mineral fillers, resulting in improved compound properties such as tensile strength and abrasion (DIN). Of particular interest are compounds containing amine and hydroxyl groups such as ethanolamine. These organic compounds are believed to disperse and bond the silica to the halogenated elastomers. Functional groups containing -OH may be, for example, alcohols or carboxylic acids. Functional groups containing a basic nitrogen atom include, but are not limited to, amines (which can be primary, secondary or tertiary) and amides.

Examples of additives which give enhanced physical properties to mixtures of halobutyl elastomers and silica include proteins, aspartic acid, 6-aminocaproic acid, diethanolamine and triethanolamine. Preferably, the additive should contain a primary alcohol group and an amino group separated by methylene bridges, which may be branched. Such compounds have the general formula HO-A-NH₂; wherein A represents a C₁ to C₂₀ alkylene group, which may be linear or branched. These compounds are described in Canadian Application 2,339,080.

The rubber blends according to the invention optionally contain crosslinking agents as well. Crosslinking agents which can be used are sulfur or peroxides, sulfur being particularly preferred. The sulphur curing can be effected in known manner. See, for instance, chapter 2, "The Compounding and Vulcanization of Rubber", of "Rubber Technology", 3^{rd} edition, published by Chapman & Hall, 1995.

The rubber composition according to the invention can contain further auxiliary products for rubbers, such as reaction accelerators, vulcanizing accelerators, vulcanizing acceleration auxiliaries, antioxidants, foaming agents, antiageing agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry.

The rubber aids are used in conventional amounts, which depend inter alia on the intended use. Conventional amounts are e.g. in the range of from 0.1 to 50 wt.%, based on rubber.

The rubber/rubbers, and optional one or more components selected from the group consisting of filler/fillers, one or more vulcanizing agents, silanes and further additives, are mixed together, suitably at an elevated temperature that may range from 30°C to 200°C. It is preferred that the temperature is greater than 60°C, and a temperature in the range 90 to 160°C is particularly preferred. Normally the mixing time does not exceed one hour and a time in the range from 2 to 30 minutes is usually adequate. The mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder.

The vulcanization of the compounds is usually effected at temperatures in the range of 100 to 200°C, preferred 130 to 180°C (optionally under pressure in the range of 10 to 200 bar).

For compounding and vulcanization see also: Encyclopedia of Polymer Science and Engineering, Vol. 4, S. 66 et seq. (Compounding) and Vol. 17, S. 666 et seq. (Vulcanization).

The following examples are provided to further illustrate the present invention:

### EXAMPLES

### General

### Experimental details

Molecular weight and molecular weight distribution were determined by GPC equipped with a UV and RI detector and using 6 Waters Ultrastyragel columns (100, 500, 10³, 10⁴, 10⁵ and 10⁶ Å), thermostated at 35 °C. The mobile phase was THF at 1 cm³/min. flow rate. Flow rate was monitored by the use of elementary sulfur as internal marker. The instrument was calibrated with 14 narrow MWD PSt standards. Molecular weight averages were calculated based on the Universal Calibration Principle using K_{PSt} = 1.12x10⁻³ cm³/g, α_{PSt} = 0.725, K_{PIB} = 2.00x10⁻³ cm³/g and α_{PIB} = 0.67.

HNMR measurements were conducted using a Bruker Avance 500 instrument and deuterated THF as solvent.

Isobutylene (IB, Matheson, 99%), methyl chloride (MeCl, Matheson, 99%), aluminum trichloride (Aldrich 99.99%) and 2,4,4-trimethyl-pentene-1 (TMP-1, Aldrich, 99%) were used without further purification. Isoprene (IP, Aldrich 99.9%), p-methyl-styrene (p-MeSt, Aldrich, 96%) and divinyl-benzene (DVB, Aldrich, 80 %) were passed through a p-tert-butylcatechol inhibitor remover column prior to usage. Composition of the DVB obtained from Aldrich was determined by GC analysis. According to the results, it contained 57.1 wt% m-divinyl-benzene, 23.9 wt% p-divinyl-benzene, 9.9 wt% m-ethyl-vinyl-benzene and 9.1 wt% p-ethyl-vinyl-benzene.

Mooney viscosity and Mooney relaxation of the compounds was measured in compliance of ASTM D1646 using a Monsanto MV2000(E) shearing viscometer at 100 °C. Preheat time was one minute the run time 4 minutes and the relaxation time four minutes.

Rheological properties of the compounds were determined using the Rubber Processing Analyser RPA2000 manufactured by Alpha Technology.

Vulcanisation characteristics were determined according to ASTM D5289 using a Monsanto Moving Die Rheometer (MDR 2000(E)).

Vulcanisation of the test species were carried out at 170 °C using a cure time of tc90 + 5 minutes.

Room temperature tensile properties of vulcanised rubbers were determined in compliance with ASTM D412 Method A (dumbbell).

Abrasion resistance was determined according to DIN 53516.

Dynamic properties of the vulcanised rubber was determined using a GABO Eplexor instrument.

### Examples 1-6

Polymers varying in isoprene, paramethyl styrene (p-MeSt.), 2,4,4-trimethyl-pentene-1 (TMP-1) and divinyl benzene (DVB) contents were prepared by polymerizations in a MBraun MB 150B-G-I dry box. Experiments were carried out at - 92 °C as follows. IB, MeCl, IP, p-MeSt, DVB and TMP-1 were charged into a 5 dm³ baffled glass reactor and equipped with a stainless steel marine type impeller and a thermocouple. Table A Lists the amount of solvent, monomers and chain transfer agent used. Polymerizations were initiated by the addition of a dilute (0.5 wt%) solution of AlCl₃ in MeCl. The polymerizations were terminated by the addition of 10 cm³ of ethanol containing 0.5 wt% NaOH. The polymers were recovered by dissolving them in hexane, followed by steam coagulation and drying on a hot mill. To each sample 0.2 g Irganox® 1076 (Ciba Chemicals) was added as antioxidant. Brominations were carried out at ambient temperature in a 3 dm³ baffled glass reactor equipped with a mechanical stirrer and two syringe ports. The reaction flask was protected from direct sunlight to minimise light induced bromination. 100 g of polymer was dissolved in hexane/dichloromethane (70/30, vol./vol.) mixture to obtain a 9 wt% solution. This solution was then transferred to the reactor followed by the addition of water. The water content was set at 8 wt% based on the total amount of the charge. The reaction was started by injection of bromine. After 5 minutes of reaction time, the reaction was terminated by the injection of caustic solution (9 wt% NaOH). The mixture was allowed to stir for an additional 10 minutes and then a stabilizer solution was added containing 0.25 phr epoxidized soy bean oil (ESBO), and 0.08 phr Irganox® 1076. The brominated rubber mixture was then washed three times, after which additional ESBO (1.25 phr) and calcium stearate (CaSt₂, 2.0 phr) were added to the mixture prior to steam stripping. The polymer was finally dried on a hot mill.

Amount of bromine added to the solution and the sum of brominated isoprene structures are listed in Table B. Table C contains the details of the microstructural composition of the samples and Table D the molecular weights and distribution of the samples. The composition and properties of the polymers prepared are summarized in Table 1

**Table A**

| Amount of Solvent, Monomers and Chain Transfer Agent Used in the Polymerization Experiments. | | | | | | |
|---|---|---|---|---|---|---|
| | **Mecl (g)** | **IB (g)** | **IP (g)** | **p-MeSt (g)** | **DVB (g)** | **TMP-1 (g)** |
| Ex. 1 | 2232 | 657 | 32.3 | 50.2 | 0.00 | 0.00 |
| Ex. 2 | 2232 | 727 | 29.4 | 0.0 | 0.82 | 0.00 |
| Ex. 3 | 2232 | 727 | 25.0 | 0.0 | 1.64 | 1.41 |
| Ex. 4 | 2232 | 657 | 23.5 | 50.2 | 0.82 | 0.56 |
| Ex. 5 | 2232 | 657 | 26.4 | 50.2 | 0.82 | 0.42 |
| Ex. 6 | 2232 | 657 | 23.5 | 50.2 | 0.82 | 0.56 |

**Table B**

| Bromination Results. | | | |
|---|---|---|---|
| | **Yield (g)** | **Br Added (ml)** | **Amount of Brominated Isoprene Units by HNMR (mol%)** |
| Ex. 1 | 104.92 | 2.1 | 1.32 |
| Ex.2 | 104.55 | 1.5 | 1.48 |
| Ex. 3 | 104.37 | 1 | 1.05 |
| Ex. 4 | 104.74 | 1.4 | 0.97 |
| Ex. 5 | 104.80 | 1.4 | 1.16 |
| Ex. 6 | 104.97 | 1.4 | 1 |

**Table C**

| Microstructural Composition of the Brominated Samples | | | | | | | | | |
|---|---|---|---|---|---|---|---|---|---|
| | **PMeSt and/or DVB** | **EXO)**^{**1**} | **Rear.**)² | **IP** | **ENDO)**^{**3**} | **ENDO CD)**^{**4**} | **EXO CD)**^{**5**} | **ISOPR. ENOID)**^{**6**} | **Total Unsatura tion)**^{**7**} |
| | **Mol%** | **Mol%** | **mol%** | **mol%** | **mol%** | **mol%** | **Mol%** | **Mol%** | |
| Ex. 1 | 5.430 | 1.080 | 0.170 | 0.120 | 0.070 | 0.030 | 0.000 | 0.140 | 1.61 |
| Ex. 2 | 0.070 | 1.320 | 0.100 | 0.120 | 0.060 | 0.000 | 0.000 | 0.070 | 1.67 |
| Ex. 3 | 0.090 | 0.900 | 0.110 | 0.430 | 0.040 | 0.000 | 0.000 | 0.060 | 1.54 |
| Ex. 4 | 5.190 | 0.850 | 0.080 | 0.050 | 0.040 | 0.000 | 0.000 | 0.120 | 1.14 |
| Ex. 5 | 5.500 | 1.010 | 0.100 | 0.070 | 0.050 | 0.010 | 0.000 | 0.170 | 1.41 |
| Ex. 6 | 5.250 | 0.830 | 0.120 | 0.070 | 0.050 | 0.000 | 0.010 | 0.130 | 1.21 |

| | | | | | | | | | |
|---|---|---|---|---|---|---|---|---|---|
| 1: EXO = Exo allylic bromide, a secondary allylic bromide structure wherein the unsaturation is external to the polymer backbone. | | | | | | | | | |
| 2: Rcar. = Rearrangement of the EXO allylic bromide leads to the formation of this primary allylic bromide structure wherein the unsaturation is located on the polymer backbone and the bromine is external to the chain in the - CH2-Br form. | | | | | | | | | |
| 3: ENDO = Endo allylic bromide, a secondary allylic structure wherein the unsaturation is on the polymer backbone. | | | | | | | | | |
| 4: ENDO CD = Dehydrobromination of the ENDO allylic bromide structure leads to the formation of this conjugated diene structure. | | | | | | | | | |
| 5: EXO CD = Dehydrobromination of the EXO allylic bromide structure leads to the formation of this conjugated diene structure. | | | | | | | | | |
| 6: ISPND = Isoprenoid structure, an incorporated isoprene unit which has tow isobutylene units incorporated in the 4 position forming a short chain branching. | | | | | | | | | |
| 7: The sum of structures containing or originating from the incorporated isoprene unit. | | | | | | | | | |

**Table D**

| Molecular Weights and Distributions of the Brominated Samples | | | | | | |
|---|---|---|---|---|---|---|
| | **Mn** | **Mw** | **Mw/Mn** | **Mz** | **Mz + 1** | **Mz/Mw** |
| Ex. 1 | 203582 | 436062 | 2.14 | 712866 | 1015771 | 1.63 |
| Ex. 2 | 240995 | 803788 | 3.34 | 1522858 | 2126354 | 1.89 |
| Ex.3 | 160854 | 737310 | 4.58 | 1517765 | 2073832 | 2.06 |
| Ex. 4 | 195564 | 480397 | 2.46 | 834664 | 1209364 | 1.74 |
| Ex. 5 | 137582 | 452549 | 3.29 | 894886 | 1336619 | 1.98 |
| Ex. 6 | 169885 | 480303 | 2.83 | 803501 | 1111364 | 1.67 |

**Table 1:**

| Composition and properties of experimental polymers | | | | | | |
|---|---|---|---|---|---|---|
| **Example** | **1 (comp.)** | **2 (comp.)** | **3 (comp.)** | **4** | **5** | **6** |
| isoprene (mol%)* | 1.57 | 1.6 | 1.38 | 1.11 | 1.3 | 1.1 |
| DVB (wt%)** | | 0.1 | 0.2 | 0.1 | 0.1 | 0.1 |
| p Me St (mol%)* | 5.2 | | | 5.3 | 5.5 | 5.3 |
| | | | | | | |

| **CP MOONEY TESTED (CPMsmall 1+ 4 @ 100°C., 80% decay, 4min relaxation).** | | | | | | |
|---|---|---|---|---|---|---|
| Mooney Viscosity (MU) | 50.7 | 83.9 | 76.8 | 50.6 | 40.4 | 54.3 |
| Time to Decay (min) | 0.65 | NR | NR | 0.71 | 0.31 | 1.12 |
| Slope (IgM/Igs) | -0.2564 | -0.0879 | -0.1286 | -0.26 | -0.3 | -0,24 |
| Intercept (MU) | 26.3 | 45.8 | 40.5 | 27.1 | 19.4 | 29.7 |
| Area Under Curve | 2047 | 7394 | 5466 | 2066 | 1261 | 2515 |
| | | | | | | |

| **MDR CURE CHARACTERISTICS (1.7 Hz., 3°arc, 60' @ 170°C.).** | | | | | | |
|---|---|---|---|---|---|---|
| MH (dN.m) | 64.5 | 59.5 | 45.2 | 53.4 | 55.5 | 53.6 |
| ML (dN.m) | 13.8 | 20.3 | 17.9 | 13.6 | 10.7 | 14.2 |
| MH-ML (dN.m) | 50.8 | 39.2 | 27.3 | 39.8 | 44.8 | 39.4 |
| ts 1 (min) | 0.48 | 0.42 | 0.54 | 0.54 | 0.54 | 0.48 |
| ts 2 (min) | 0.54 | 0.54 | 0.66 | 0.66 | 0.6 | 0.6 |
| t' 10 (min) | 0.75 | 0.63 | 0.71 | 0.78 | 0.82 | 0.74 |
| t' 25 (min) | 1.31 | 0.96 | 1.08 | 1.32 | 1.45 | 1.26 |
| t' 50 (min) | 2.51 | 1.66 | 1.89 | 2.46 | 2.72 | 2.37 |
| t' 90 (min) | 8.98 | 5.56 | 5.44 | 7.18 | 8.13 | 6.96 |
| t' 95 (min) | 11.88 | 7.4 | 6.96 | 9.1 | 10.46 | 8.88 |
| Delta t'50-t'10 (min) | 1.76 | 1.03 | 1.18 | 1.68 | 1.9 | 1.63 |
| | | | | | | |

| **STRESS STRAIN (Die C DUMBELLS, t90+5 @ 170°C., tested @ 23°C.)** | | | | | | |
|---|---|---|---|---|---|---|
| Shore A2 (pts.) | 62 | 64 | 61 | 59 | 60 | 59 |
| Tensile (MPa) | 12.8 | 12.5 | 13.2 | 15.0 | 14.2 | 16.5 |
| Elongation (%) | 198 | 198 | 414 | 269 | 453 | 276 |
| Stress @ 25 (MPa) | 1.03 | 1.19 | 1.03 | 0.93 | 1.01 | 0.88 |
| Stress @ 50 (MPa) | 1.83 | 2.07 | 1.71 | 1.53 | 1.66 | 1.5 |
| Stress @ 100 (MPa) | 4.08 | 4.53 | 3.7 | 3.02 | 3.48 | 3.05 |
| Stress @ 200 (MPa) | | | 8.19 | 8.87 | 7.58 | 9.52 |
| Stress @ 300 (MPa) | | | 9.08 | | 9.93 | |
| 300M/ 10M | | | 2.5 | | 2.9 | |
| 20M/50M | | | 4.8 | 5.8 | 4.6 | 6.3 |
| UTS*E% | 2538 | 2465 | 5461 | 4038 | 6433 | 4546 |
| | | | | | | |

| **DIN ABRASION (cure tc90+10 @ 170°C.,)** | | | | | | |
|---|---|---|---|---|---|---|
| Specific Gravity | 1.1858 | | | 1.18 | 1.181 | 1.181 |
| Loss (mm³) | 161 | 196 | 205 | 125 | 128 | 137 |
| | | | | | | |

| **GABO, TEMPERATURE SWEEP (-100 to +100°C., cured tc90+5 @ 170°C)** | | | | | | |
|---|---|---|---|---|---|---|
| Tan delta@ 0°C. | 0.961 | 0.732 | 0.729 | 0.949 | 0.975 | 0.984 |
| Tan delta@ +60°C. | 0.087 | 0.065 | 0.094 | 0.077 | 0.106 | 0.095 |
| E" @+60°C. | 8.72 | 8.42 | 10.89 | 6.85 | 9.33 | 8.39 |
| | | | | | | |

| **RPA G* @ 0.28% strain (100°C.).** | | | | | | |
|---|---|---|---|---|---|---|
| | 185 | 353 | 250 | 166 | 149 | 168 |

| | | | | | | |
|---|---|---|---|---|---|---|
| *Composition of the polymer determined prior to bromination. | | | | | | |
| **DVB content of the monomer charge used for polymerisation. | | | | | | |

### Examples 7-13

### Evaluation of polymers

### Compound recipe and miniature internal mixer procedure.

An internal mixer (Brabender) was used to prepare the compounds. The compound recipe used to evaluate the polymers was:

| | |
|---|---|
| Polymer | 100 |
| HiSil® 233 | 60 |
| TESPD (bis(triethoxysilylpropyl)disulphide) | 4 |
| APTES (3-aminopropyl triethoxy silane). | 4 |
| Sunpar® 2280 (napthenic oil) | 5 |
| Stearic acid | 1 |
| ZnO | 1.5 |
| Sulfur | 1 |

HiSil® 233 isa silica commercially available from PPG Industries.
Sunpar® 2280 is a naphthenic oil commercially available from SUN LUBRICANTS AND SPECIALTY PRODUCTS INC.

The Brabender was run at 60 rpm with a nominal fill factor of 78% assuming a volume of 75 mls. The initial temperature of the Brabender was set at 100°C. and the total mixing time was 6 minutes. The curatives (Stearic acid, ZnO and S) were added on a cool mill.
Table 2 gives the compound properties for a number of brominated co-, ter, and quartpolymers.

Bayer Bromobutyl 2030 (sample A), is a brominated copolymer of isoprene and isobutylene available from Bayer Inc., and provides a reference point to measure the improvement in properties (Example 7 - comparative)
Terpolymers of isobutylene, isoprene with either DVB or p Methyl Styrene (samples from Exp. 1, 2, 3) provide additional reference points (Examples 7-9 - comparative).

**Table 2**

| Compounds prepared from the polymers prepared | | | | | | | |
|---|---|---|---|---|---|---|---|
| **Example** | **7** | **8** | **9** | **10** | **11** | **12** | **13** |
| Polymer used | A | Exp. 1 | Exp. 2 | Exp. 3 | Exp. 4 | Exp. 5 | Exp. 6 |
| | | | | | | | |

| **Compound MOONEY (CPMsmall 1+ 4 @ 100°C., 80% decay, 4min relax.)** | | | | | | | |
|---|---|---|---|---|---|---|---|
| Mooney Viscosity (MU) | 68.2 | 50.7 | 83.9 | 76.8 | 50.6 | 40.4 | 54.3 |
| | | | | | | | |

| **MDR CURE CHARACTERISTICS (1.7 Hz., 3°arc, 60' @ 170°C.).** | | | | | | | |
|---|---|---|---|---|---|---|---|
| MH (dN.m) | 46.0 | 64.5 | 59.5 | 45.2 | 53.4 | 55.5 | 53.6 |
| ML (dN.m) | 15.0 | 13.8 | 20.3 | 17.9 | 13.6 | 10.7 | 14.2 |
| MH-ML (dN.m) | 31.0 | 50.8 | 39.2 | 27.3 | 39.8 | 44.8 | 39.4 |
| ts 2 (min) | 0.72 | 0.54 | 0.54 | 0.66 | 0.66 | 0.6 | 0.6 |
| t' 10(min) | 0.79 | 0.75 | 0.63 | 0.71 | 0.78 | 0.82 | 0.74 |
| t' 50 (min) | 2.27 | 2.51 | 1.66 | 1.89 | 2.46 | 2.72 | 2.37 |
| t' 90(min) | 6.25 | 8.98 | 5.56 | 5.44 | 7.18 | 8.13 | 6.96 |
| | | | | | | | |

| **STRESS STRAIN (Die C DUMBELLS, t90+5 @ 170°C., tested @ 23°C.)** | | | | | | | |
|---|---|---|---|---|---|---|---|
| Shore A2 (pts.) | 58 | 62 | 64 | 61 | 59 | 60 | 59 |
| Tensile (MPa) | 16.8 | 12.8 | 12.5 | 13.2 | 15.0 | 14.2 | 16.5 |
| Elongation (%) | 333 | 198 | 198 | 414 | 269 | 453 | 276 |
| | | | | | | | |
| Stress @ 50 (MPa) | 1.31 | 1.83 | 2.07 | 1.71 | 1.53 | 1.66 | 1.5 |
| Stress @ 100 (MPa) | 2.42 | 4.08 | 4.53 | 3.7 | 3.02 | 3.48 | 3.05 |
| Stress @ 200 (MPa) | 7.08 | | | 8.19 | 8.87 | 7.58 | 9.52 |
| Stress @ 300 (MPa) | 14.64 | | | 9.08 | | 9.93 | |
| 200M/ 50M | 5.4 | | | 4.8 | 5.8 | 4.6 | 6.3 |
| | | | | | | | |

| **DIN ABRASION (cure tc90+10 @ 170°C.,)** | | | | | | | |
|---|---|---|---|---|---|---|---|
| Volume Loss (mm³) | 175 | 161 | 196 | 205 | 125 | 128 | 137 |
| | | | | | | | |

| **GABO, TEMPERATURE SWEEP (-100 to +100°C., cured tc90+5 @ 170°C)** | | | | | | | |
|---|---|---|---|---|---|---|---|
| Tan delta@ 0°C. | 0.780 | 0.961 | 0.732 | 0.729 | 0.949 | 0.975 | 0.984 |
| Tan delta@ +60°C. | 0.080 | 0.087 | 0.065 | 0.094 | 0.077 | 0.106 | 0.095 |
| E" @ +60°C. | 7.14 | 8.72 | 8.42 | 10.89 | 6.85 | 9.33 | 8.39 |
| | | | | | | | |

| **RPA G* @ 0.28% strain (100°C.).** | | | | | | | |
|---|---|---|---|---|---|---|---|
| | 225 | 185 | 353 | 250 | 166 | 149 | 168 |

The data in Table 2 show that the polymers according to the invention Examples 11-13 have significantly lower DIN volume loss than any of the comparative Examples 7-10.

## Claims

1. A process for the preparation of a Rubber composition of low DIN volume loss comprising mixing at least one isoolefin monomer, at least one multiolefin monomer and at least one styrenic monomer with at least one aromatic multiolefin cross-linking agent to form isoolefin multiolefin quart polymer with a gel content of the copolymer less than 1,2 wt% and a weight average molecular weight M_{b} of greater than 200 kg/mol and further comprising adding at least one silica compound to the quart polymers, wherein the quart-polymer is optionally halogenated.

2. A method according to claim 1 wherein that said rubber composition comprises isoolefin multiolefin quartpolymer synthesized from isobutylene, isoprene, at least one aromatic multiolefin cross-linking agent and at least one styrenic monomer.

3. A method according to claim 1 or 2 wherein that said rubber composition comprises furthermore a rubber selected from the group consisting of natural rubber, BR, ABR, CR. IR, SBR, NBR, HNBR, EPDM, FKM and mixtures thereof.

4. A method according to any of claims 1 to 3 wherein that said rubber composition comprises furthermore a filler selected from the group consisting of carbon black, mineral filler and mixtures thereof.

5. A method according to any of claims 1 to 4 wherein that said rubber composition comprises furthermore an elastomer filler bonding agent and a vulcanizing agent.

6. A method according to claim 5 wherein that said rubber composition comprises furthermore a silane compound or mixture of silane compounds and a vulcanizing agent.

7. A method for the preparation of a rubber compound according to any of claims 1 to 6 wherein an optionally halogenated, low-gel, high molecular weight isoolefin multiolefin quartpolymer and at least one silica compound is mixed with one or more compounds selected from the group consisting of rubber, filler, vulcanizing agent, silane compound, additives.

8. A tire tread comprising rubber compound according to any of claims 1 to 6.

## Patentansprüche

1. Verfahren zur Herstellung einer Kautschuk-Zusammensetzung mit geringem DIN-Volumenverlust, umfassend das Vermischen wenigstens eines Isoolefin-Monomers, wenigstens eines Mehrfacholefin-Monomers und wenigstens eines Styroi-Monomers mit wenigstens einem aromatischen Mehrfacholefin-Vernetzungsmittel, um ein Isoolefin-Mehrfacholefin-Quartpolymer mit einem Gelgehalt des Copolymers von weniger als 1,2 Gew.-% und einem Massenmittel der Molmasse M_{b} von größer als 200 kg/mol zu bilden, und das weiterhin die Zugabe wenigstens einer Siliciumdioxid-Verbindung zu dem Quartpolymer umfasst, wobei das Quartpolymer gegebenenfalls halogeniert ist.

2. Verfahren gemäß Anspruch 1, wobei die Kautschuk-Zusammensetzung ein Isoolefin-Mehrfacholefin-Quartpolymer umfasst, das aus Isobutylen, Isopren, wenigstens einem aromatischen Mehrfacholefin-Vernetzungsmittel und wenigstens einem Styrol-Monomer synthetisiert wird.

3. Verfahren gemäß den Ansprüchen 1 oder 2, wobei die Kautschuk-Zusammensetzung weiterhin einen Kautschuk umfasst, der aus der Gruppe ausgewählt ist, bestehend aus natürlichem Kautschuk, BR, ABR, CR, IR, SBR, NBR, HNBR, EPDM, FKM und Mischungen derselben.

4. Verfahren gemäß irgendeinem der Ansprüche 1 bis 3, wobei die Kautschuk-Zusammensetzung weiterhin einen Füllstoff umfasst, der aus der Gruppe ausgewählt ist, bestehend aus Ruß, mineralischem Füllstoff und Mischungen derselben.

5. Verfahren gemäß irgendeinem der Ansprüche 1 bis 4, wobei die Kautschuk-Zusammensetzung weiterhin ein Elastomerfüllstoff-Bindemittel und ein Vulkanisationsmittel umfasst.

6. Verfahren gemäß Anspruch 5, wobei die Kautschuk-Zusammensetzung weiterhin eine Silan-Verbindung oder eine Mischung von Silan-Verbindungen und ein Vulkanisationsmittel umfasst.

7. Verfahren zur Herstellung einer Kautschuk-Verbindung gemäß irgendeinem der Ansprüche 1 bis 6, wobei ein gegebenenfalls halogeniertes hochmolekulares Isoolefin-Mehrfacholefin-Quartpolymer mit niedrigem Gelgehalt und wenigstens eine Siliciumdioxid-Verbindung mit einer oder mehreren Verbindungen vermischt werden, die aus der Gruppe ausgewählt sind, bestehend aus Kautschuk, Füllstoff, Vulkanisationsmittel, Silan-Verbindung und Additiven.

8. Reifenlauffläche, die den Kautschuk gemäß irgendeinem der Ansprüche 1 bis 6 umfasst.

## Revendications

1. Un procédé pour la préparation d'une composition de caoutchouc à faible perte de volume DIN qui consiste à mélanger au moins une isooléfine monomère, au moins une multioléfine monomère et au moins un monomère styrénique avec au moins un agent réticulant du type multioléfine aromatique de manière à former un polymère quaternaire d'iisooléfines et de multioléfines, ce copolymère ayant une teneur en gel inférieure à 1,2 % en poids et un poids moléculaire moyen, moyenne en poids M_{b} supérieur à 200 kg/mol, et à ajouter en outre au polymère quaternaire au moins une silice, le polymère quaternaire étant éventuellement halogéné.

2. Un procédé selon la revendication 1 dans lequel ladite composition de caoutchouc consiste en un polymère quaternaire d'isooléfines et multioléfines synthétisé à partir de l'isobutylène, de l'isoprène, d'au moins un agent réticulant du type multioléfine aromatique et d'au moins un monomère styrénique.

3. Un procédé selon la revendication 1 ou 2, dans lequel ladite composition de caoutchouc comprend en outre un caoutchouc choisi dans le groupe consistant en le caoutchouc naturel, les caoutchoucs BR, ABR, CR, IR, SBR, NBR, HNBR, EPDM, FKM et leurs mélanges.

4. Un procédé selon l'une quelconque des revendications 1 à 3, dans lequel ladite composition de caoutchouc comprend en outre une matière de charge choisie dans le groupe consistant en le noir de carbone, les charges minérales et leurs mélanges.

5. Un procédé selon l'une quelconque des revendications 1 à 4, dans lequel ladite composition de caoutchouc comprend en outre une matière de charge élastomère agissant comme liant et un agent vulcanisant.

6. Un procédé selon la revendication 5, dans lequel ladite composition de caoutchouc comprend en outre un silane ou un mélange de silanes et un agent vulcanisant.

7. Un procédé pour la préparation d'une composition de caoutchouc selon l'une quelconque des revendications 1 à 6, dans lequel on mélange un polymère quaternaire d'isooléfines et de multioléfines, à haut poids moléculaire, à faible teneur en gel et éventuellement halogéné et au moins une silice avec un ou plusieurs composants choisis dans le groupe consistant en les caoutchoucs, les matières de charge, les agents vulcanisants, les silanes, les additifs.

8. Une bande de roulement de pneumatique consistant en une composition de caoutchouc selon l'une quelconque des revendications 1 à 6.
